# EUROPÄISCHE PATENTSCHRIFT

(11) **EP 1 220 005 B1**
(45) Veröffentlichungstag und Bekanntmachung des Hinweises auf die Patenterteilung: **19.10.2005**
(21) Anmeldenummer: 01127889.2
(22) Anmeldetag: 23.11.2001
(51) Int. Cl.: G02B 21/18, G02B 21/16, G02B 21/24

(54) **Mikroskop**
Microscope
Microscope

(30) Priorität: 11.12.2000 DE 10061627; 07.11.2001 DE 10154240
(43) Veröffentlichungstag der Anmeldung: 03.07.2002
(73) Patentinhaber: Leica Microsystems Semiconductor GmbH, 35578 Wetzlar (DE)
(72) Erfinder: Hedrich, Roland, 35630 Ehringshausen (DE)
(74) Vertreter: Reichert, Werner Franz

(56) Entgegenhaltungen:
- EP-A- 0 896 237
- DE-A- 4 107 070
- US-A- 5 469 299
- US-A- 5 703 714
- US-A- 5 808 807

## Beschreibung

Die Erfindung betrifft Mikroskop mit einer Möglichkeit zur Umschaltung der Beleuchtung zwischen dem ultravioletten Spektralbereich und dem sichtbaren VIS-Spektralbereich.

Ein Mikroskop der eingangs genannten Art beschreibt die EP 0 896 237. Sie weist einen Reflektorträger mit mehreren wahlweise in den Beleuchtungsstrahlengang einbringbaren Reflektoren auf, die dem ultravioletten Spektralbereich oder dem sichtbaren VIS-Spektralbereich zugeordnet sind. Eine Umschaltung des Beleuchtungsstrahlengangs auf einen gewählten Spektralbereich erfolgt, indem ein diesem Spektralbereich zugeordneter Reflektor in den Beleuchtungsstrahlengang eingebracht wird. Die Abbildung erfolgt dabei stets im sichtbaren Spektralbereich. In einer anderen Variante des Mikroskops erfolgt auch die Abbildung im ultravioletten Spektralbereich, was eine bessere Auflösung bewirkt. Eine Beleuchtung und Abbildung der Probe im fernen ultravioletten DUV-Spektralbereich wird jedoch nicht angegeben.

Die Auflösung eines Mikroskops hängt wesentlich von der Wellenlänge des verwendeten Beleuchtungslichts ab. Konventionelle Mikroskope werden mit Licht im sichtbaren Wellenlängenbereich (nachfolgend kurz als VIS-Spektralbereich - für englisch "visible"- bezeichnet) betrieben. Zur Auflösung extrem kleiner Strukturen, z.B. auf Wafern oder Schaltungen in der Halbleiter-industrie, ist eine Abbildung bei kürzeren Wellenlängen im tief-ultravioletten Bereich des Lichtspektrums (nachfolgend kurz als DUV-Spektralbereich- für englisch "deep ultraviolet"- bezeichnet) erforderlich. Das Mikroskopbild wird im DUV-Betrieb dabei mit einer für das DUV-Licht empfindlichen TV-Kamera sichtbar gemacht.

Die Materialien in konventionellen Optiken, die für den VIS-Spektralbereich geeignet sind, sind im DUV-Spektralbereich nicht durchlässig. Daher sind beim DUV-Betrieb des Mikroskops aus speziellen Materialien aufgebaute Optiken wie Prismen, Strahlteiler, Tubuslinsen sowie auch Objektive erforderlich, die für DUV-Wellenlängen korrigiert sind. Um den zukünftigen Anforderungen der Halbleiter-Industrie zu entsprechen, weist ein DUV-Mikroskop vorzugsweise Umschaltungsmöglichkeiten zwischen VIS- und DUV-Optiken und der jeweils zugehörigen Beleuchtung auf, bei der auch eine Umschaltung zwischen VIS- und DUV-Objektiven vorgenommen wird.

Heutzutage sind die bezüglich der Bildfehler hochauskorrigierten Objektive der meisten Hersteller für einen Unendlich-Strahlengang gerechnet und bilden mit einer Tubuslinse ein Kompensationssystem. Das heißt, dass bei der Korrektion der Bildfehler ein erster Anteil der Bildfehler im Objektiv und der verbleibende Anteil der Bildfehler in der Tubuslinse auskorrigiert wird. Entsprechend besteht dann eine Tubuslinse auch nicht mehr zwingend, wie die Bezeichnung vermuten lässt, aus einer Einzellinse, sondern kann aus Linsengruppen bzw. einem Tubuslinsensystem aufgebaut sein. Es muss daher für verschiedene Objektive, die für unterschiedliche Spektralbereiche gerechnet sind, eine jeweils unterschiedliche, für das betreffende Objektiv und den betreffenden Spektralbereich kompensierende Tubuslinse in den Strahlengang eingebracht werden. Ein solches Kompensationssystem aus Objektiv und Tubuslinse ist beispielsweise in der DE 199 31 949 A1 beschrieben.

Bei einem Mikroskop mit einer Umschaltungsmöglichkeit für wahlweises Arbeiten im fernen ultravioletten oder im sichtbaren Spektralbereich erfolgt dabei die Kompensation stets für den gewählten Spektralbereich. Bei einer Umschaltung des verwendeten Spektralbereichs muss daher auch der Tubuslinsenwechsler auf eine passende Tubuslinse eingestellt werden.

Bei den bekannten Mikroskopen, die sowohl für Arbeiten im DUV-Spektralbereich als auch im VIS-Spektralbereich ausgelegt sind, sind zusätzlich im Beleuchtungsstrahlengang verschiedene Reflektoren und Filter einstellbar, die für verschiedene Mikroskopier- und Kontrastverfahren (wie beispielsweise Hellfeld-, Dunkelfeld-, Interferenz-Kontrast- und DUV- Verfahren) vorgesehen und auf einem Reflektorträger angeordnet sind. Die Einstellung kann per Hand oder vorzugsweise motorisch erfolgen

Je nach Einstellung des Mikroskops muss eine Tubuslinse nicht nur einem bestimmten Objektiv, sondern zusätzlich noch einem bestimmten Reflektor oder Filter zugeordnet werden. Bei den bekannten Mikroskopen erfolgt das entsprechende Verstellen des Tubuslinsenwechslers über einen eigenen motorischen Antrieb des Tubuslinsenwechslers. Die Zuordnung der motorisch verstellbaren Reflektoren (bzw. auch Filter) einerseits und der entsprechenden Tubuslinse andererseits erfolgt dann softwaremäßig.

Nachteilig bei dieser bekannten Verstellung und Zuordnung des Tubuslinsenwechslers bzw. der Tubuslinse ist einerseits der aufwendige und platzintensive Einsatz eines motorischen Antriebs für den Tubuslinsenwechsler und andererseits der Umstand, dass eine Programmstörung oder ein Programmausfall zu einer falschen Zuordnung von Reflektor und Tubuslinse beim Arbeiten im UV-Lichtbereich führen kann.

Davon ausgehend liegt der Erfindung die Aufgabe zugrunde, ein Mikroskop mit einer einfachen und sicheren Umschaltungsmöglichkeit für wahlweises Arbeiten im fernen ultravioletten oder im sichtbaren Spektralbereich zu schaffen.

Die Lösung dieser Aufgabenstellung wird bei einem Mikroskop mit den Merkmalen des Oberbegriffs des Anspruch 1 gelöst durch die kennzeichnenden Merkmale des Anspruchs 1. Vorteilhafte Ausgestaltungen werden durch Unteransprüche angegeben.

Durch die erfindungsgemäße mechanische Zwangskopplung der Bewegung des Reflektorträgers mit der des Tubuslinsenwechsler kann auf einen eigenen Antrieb für den Tubuslinsenwechsler verzichtet werden. Darüber hinaus ist die mechanische Kopplung der beiden Baugruppen so ausgelegt, dass beispielsweise automatisch dem Reflektor für Untersuchungen im DUV-Spektralbereich eine DUV-Tubuslinse zugeordnet ist. Damit entfällt die Notwendigkeit einer separaten und somit auch fehleranfälligen softwaremäßigen oder ähnlichen Zuordnung der Baugruppen zueinander.

Gemäß einer praktischen Ausführungsform der Erfindung wird vorgeschlagen, dass die Zwangskopplung zwischen Reflektorträger und Tubuslinsenwechsler über mindestens einen Mitnehmerstift erfolgt, der als am Reflektorträger festgelegter Stift ausgebildet ist, der in eine entsprechende Aufnahme des Tubuslinsenwechslers eingreift und diesen beim Verstellen des Reflektorträgers zwangsläufig mitnimmt.

Der Tubuslinsenwechsler ist vorteilhafterweise platzsparend als drehbar gelagerte Scheibe ausgebildet, deren Verdrehwinkel zum Einstellen der Tubuslinsen in die optische Achse durch justierbare Anschläge begrenzbar ist.

Um den Tubuslinsenwechsler und somit die Tubuslinsen positionsgenau in den Enlagen des Verdrehwinkels zu halten, wird weiterhin vorgeschlagen, dass der Tubuslinsenwechsler in den Endlagen in Richtung auf die Anschläge federbelastet ist.

Zur Ausbildung des Reflektorträgers wird mit der Erfindung vorgeschlagen, diesen als Linearschieber auszubilden, da ein solcher Schieber entlang einer Linearführung sicher und positionsgenau verfahrbar ist. Dies ist im vorliegenden Fall um so wichtiger, da aufgrund der Zwangskopplung die Bewegung des Reflektorträgers direkt die Verstellung des Tubuslinsenwechslers bewirkt.

Schließlich wird mit der Erfindung vorgeschlagen, dass der Linearschieber motorisch antreibbar ist.

Weitere Merkmale und Vorteile der Erfindung ergeben sich anhand der nachfolgenden Beschreibung der zugehörigen Zeichnung, in der zwei Ausführungsformen eines erfindungsgemäßen Mikroskops nur beispielhaft schematisch dargestellt sind. In der Zeichnung zeigt:
- Fig. 1: eine teilweise geschnittene schematische Darstellung des Aufbaus eines Mikroskops;
- Fig. 2: eine schematische Draufsicht auf einen Tubuslinsenwechseler und einen Reflektorträger gemäß der Erfindung, den Tubuslinsenwechsler in einer ersten Endlage darstellend;
- Fig. 3: eine Fig. 2 entsprechende Ansicht, jedoch den Tubuslinsenwechsler in einer zweiten Endlage darstellend;
- Fig. 4: eine Fig. 3 entsprechende Ansicht, jedoch den Tubuslinsenwechsler und den Reflektorträger nebeneinander darstellend;
- Fig. 5: eine schematische Ansicht einer zweiten erfindungsgemäßen Ausführungsform von Tubuslinsenwechsler und Reflektorträger.

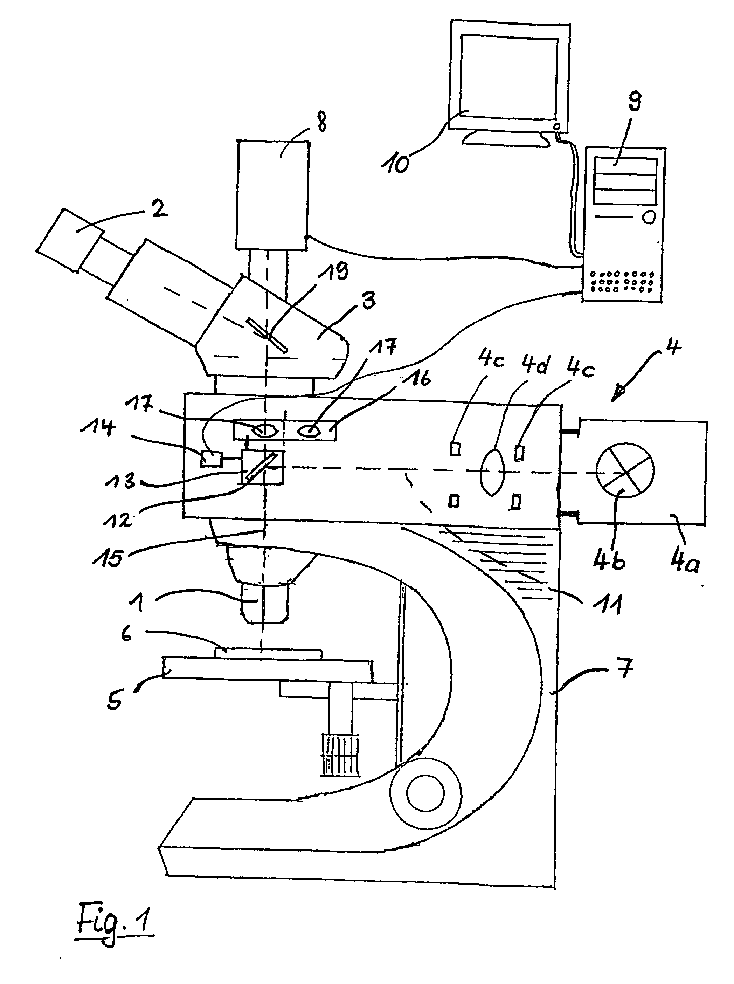

In ***Fig. 1*** ist schematisch der Aufbau eines Mikroskops, in diesem Fall eines Auflichtmikroskops dargestellt. Das dargestellte Mikroskop besteht im wesentlichen aus zwei optischen Systemen, einem Objektiv 1 und einem Okular 2, die durch einen Tubus 3 miteinander verbunden sind, einer Beleuchtungseinrichtung 4 sowie einem Objekttisch 5 zur Aufnahme einer zu untersuchenden Probe 6 und einem Stativ 7 zur Halterung der optischen Teile.

Zur Beobachtung, Darstellung sowie Speicherung und Bearbeitung ist das dargestellte Mikroskop weiterhin mit einer Kamera 8 sowie einem Rechner 9 mit Monitor 10 ausgestattet.

Die Beleuchtungseinrichtung 4 dieses Auflichtmikroskops besteht aus einer in einem Lampengehäuse 4a angeordneten Lichtquelle 4b, deren Licht entlang der optischen Achse 11 des Beleuchtungsstrahlengangs über eine Beleuchtungsoptik 4c sowie Blenden 4d auf einen Reflektor 12 gelenkt wird, um von diesem auf die auf dem Objekttisch 5 angeordnete Probe 6 abgelenkt zu werden. Der den Lichtstrahl des Beleuchtungsstrahlengangs ablenkende Reflektor 12 ist auf einem als Linearschieber ausgebildeten Reflektorträger 13 angeordnet, der mehrere Reflektoren bzw. Filter 12 trägt, die je nach gewähltem Spektralbereich und Kontrastverfahren in die optische Achse einbringbar sind. Im dargestellten Fall ist der Reflektorträger 13 über einen Antrieb 14 motorisch antreibbar.

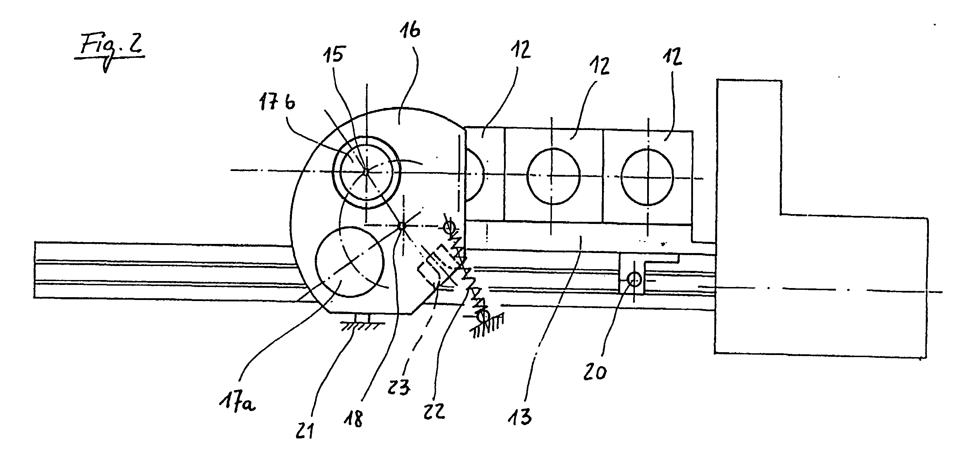

In der optischen Achse 15 des Betrachtungsstrahlengangs ist oberhalb des Reflektorträgers 13 ein Tubuslinsenwechsler 16 angeordnet, über den in Abhängigkeit von dem gewählten Kontrastverfahren und somit des gewählten Reflektors 12 eine entsprechende Tubuslinse 17 in die optische Achse 15 verschwenkbar ist. Wie aus den Abbildungen ***Fig. 2*** bis ***5*** ersichtlich, ist der Tubuslinsenwechsler 16 als um einen Drehpunkt 18 verschwenkbare Scheibe ausgebildet.

Zur Betrachtung der auf dem Objekttisch 5 angeordneten Probe 6 durch das Okular 2 oder zur Aufnahme mittels der Kamera 8 ist in der optischen Achse 15 des Betrachtungsstrahlengangs weiterhin ein Strahlteiler 19 angeordnet. Das Zuordnen einer bestimmten Tubuslinse 17 zu einem bestimmten Kontrastverfahren und somit Reflektor 12 erfolgt in der Weise, dass entsprechend dem gewählten Spektralbereich (VIS oder DUV) ein dazu passendes Objektiv ausgewählt wird und diesem die für das Kompensationssystem zugehörige Tubuslinse zugeordnet wird. Zu diesem Zweck ist das dargestellte Mikroskop so ausgelegt, daß beim Anordnen des DUV-Reflektors 12 mittels des Reflektorträgers 13 im Beleuchtungsstrahlengang automatisch der Tubuslinsenwechsler 16 so betätigt wird, dass eine DUV-Tubuslinse 17 in der optischen Achse 15 des Betrachtungsstrahlengangs angeordnet und damit dem passenden Objektiv zugeordnet wird.

Bei der dargestellten Ausführungsform sind der Reflektorträger 13 einerseits und der Tubuslinsenwechsler 16 andererseits über einen Mitnehmerstift 20 mechanisch miteinander zwangsgekoppelt. Der genau Aufbau des als Linearschieber ausgebildeten Reflektorträgers 13 sowie des Tubuslinsenträgers 16 ist den Abbildungen ***Fig. 2*** bis ***5*** zu entnehmen.

Die Abbildungen ***Fig. 2, 3*** und ***4*** zeigen einen Reflektorträger 13 mit drei darauf angeordneten Reflektoren 12, wobei im dargestellten Fall der ganz rechts angeordnete Reflektor 12 ein DUV-Reflektor 12 ist. Im Betrachtungsstrahlengang oberhalb des Reflektorträgers 13 ist der Tubuslinsenwechsler 16 angeordnet, der gemäß den Abbildungen ***Fig. 2*** bis ***4*** mit zwei Tubuslinsen 17 ausgestattet ist, nämlich einer DUV-Tubuslinse 17a für den DUV-Spektralbereich und einer VIS-Tubuslinse 17b für den sichtbaren VIS-Spektralbereich. Dabei handelt es sich um eine besonders vorteilhafte Ausführungsform, da die jeweilige DUV-Tubuslinse 17a so berechnet und konzipiert ist, dass sie mit verschiedenen DUV-Objektiven ein Kompensationssystem bildet und bei allen Arbeiten im DUV-Betrieb verwendet werden kann. Ebenso ist die VIS-Tubuslinse 17b so berechnet und konzipiert ist, dass sie mit verschiedenen VIS-Objektiven ein Kompensationssystem bildet und bei allen Arbeiten im VIS-Betrieb verwendet werden kann.

In Abhängigkeit davon, wie das jeweilige Kompensationssystem berechnet ist, können jedoch zu verschiedenen VIS-Objektiven auch unterschiedliche VIS-Tubuslinsen sowie zu verschiedenen DUV-Objektiven auch unterschiedliche DUV-Tubuslinsen vorgesehen sein (hier nicht dargestellt).

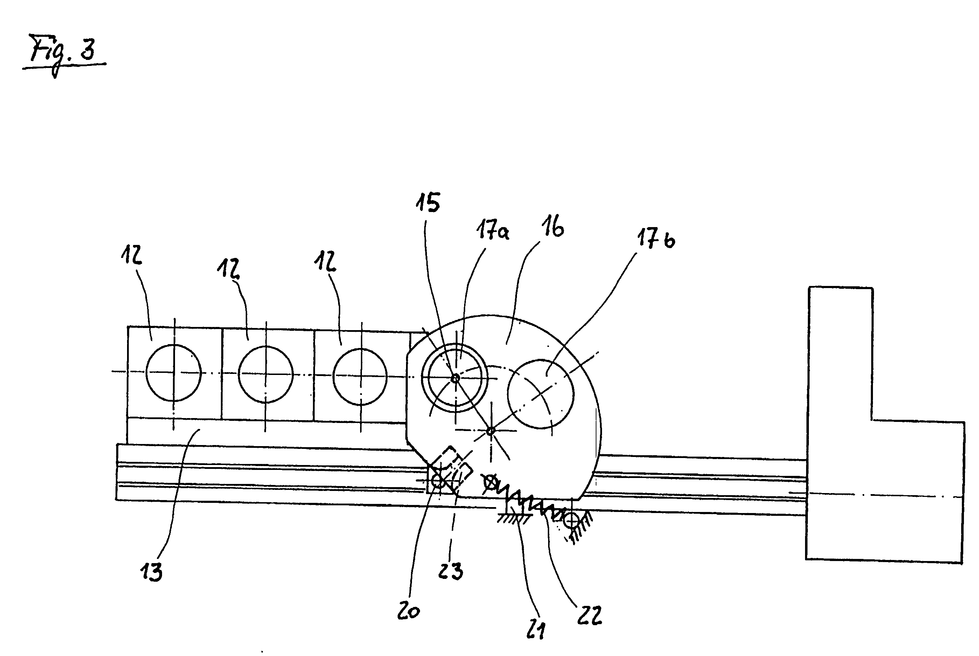

Der Tubuslinsenwechsler 16 ist zwischen den in den Abbildungen ***Fig. 2*** und ***3*** dargestellten Endlagen um den Drehpunkt 18 verschwenkbar, wobei der Verdrehwinkel in den Endlagen durch Anschläge 21 begrenzt wird. Um sicherzustellen, dass die jeweilige Tubuslinse 17 in der Endlage des Tubuslinsenwechslers 16 auch genau in der optischen Achse 15 angeordnet ist, sind die Anschläge 21 justierbar ausgebildet. Darüber hinaus weist der Tubuslinsenwechsler 16 eine Feder 22 auf, die den Tubuslinsenwechsler in den Endlagen gegen den jeweiligen Anschlag 21 vorspannt, um die jeweilige Tubuslinse 17 sicher in der richtigen Lage in der optischen Achse 15 zu halten.

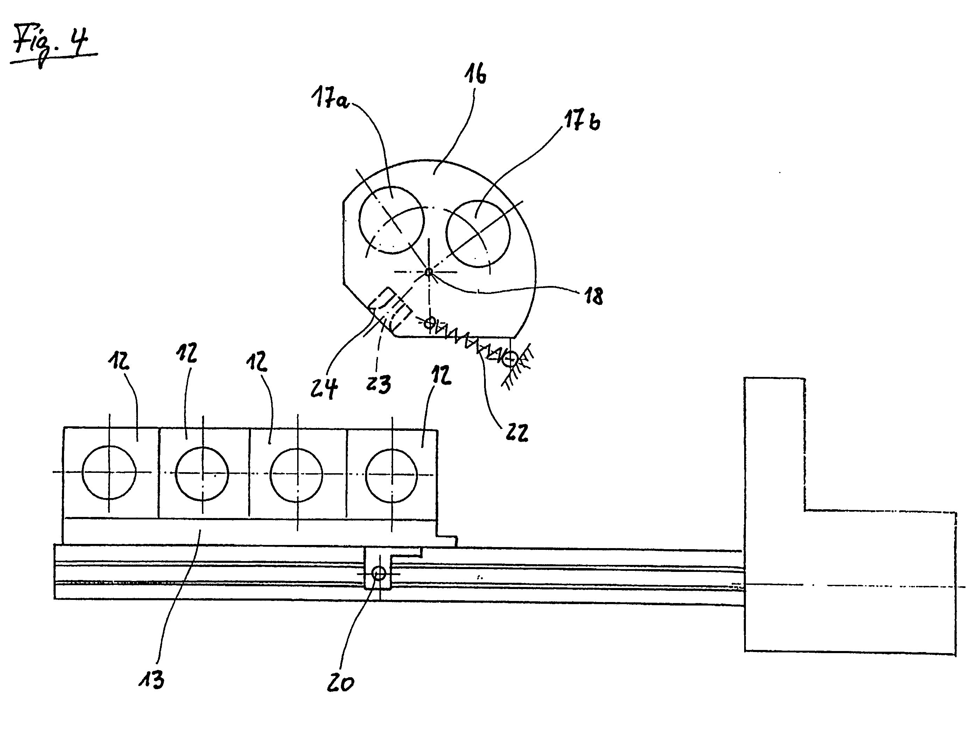

Der in ***Fig. 1*** schematisch dargestellte, die mechanisch Zwangskopplung zwischen dem Reflektorträger 13 einerseits und dem Tubuslinsenwechsler 16 andererseits bewirkende Mitnehmerstift 20 ist auf Höhe des DUV-Reflektors 12 am Reflektorträger 13 festgelegt. Wie aus ***Fig. 2*** und ***3*** ersichtlich, greift der Mitnehmerstift 20 beim Verfahren von der in ***Fig. 2*** dargestellten Position des Reflektorträgers 13 in die in ***Fig. 3*** dargestellte Position in eine im Tubuslinsenwechsler 16 ausgebildete Aufnahme 23 ein. Durch das Einlaufen des Mitnehmerstifts 20 in die Aufnahme 23 und das weitere Verfahren des Reflektorträgers 13 wird der Tubuslinsenwechsler 16 über den Mitnehmerstift 20 zwangsweise um den Drehpunkt 18 verschwenkt, bis beim Anordnen des DUV-Reflektors 12 in der optischen Achse 15 auch die DUV-Tubuslinse 17a in der optischen Achse 15 angeordnet ist, wie dies die Abbildungen ***Fig. 3*** und ***4*** zeigen. Das Eintreten des Mitnehmerstifts 20 in die Aufnahme 23 wird dadurch erleichtert, dass die Aufnahme 23 im Bereich ihrer Öffnung beidseitig mit Anlaufschrägen 24 versehen ist. Jede Tubuslinse 17 kann als ein aus mehreren Linsen zusammengesetztes Linsensystem ausgebildet sein.

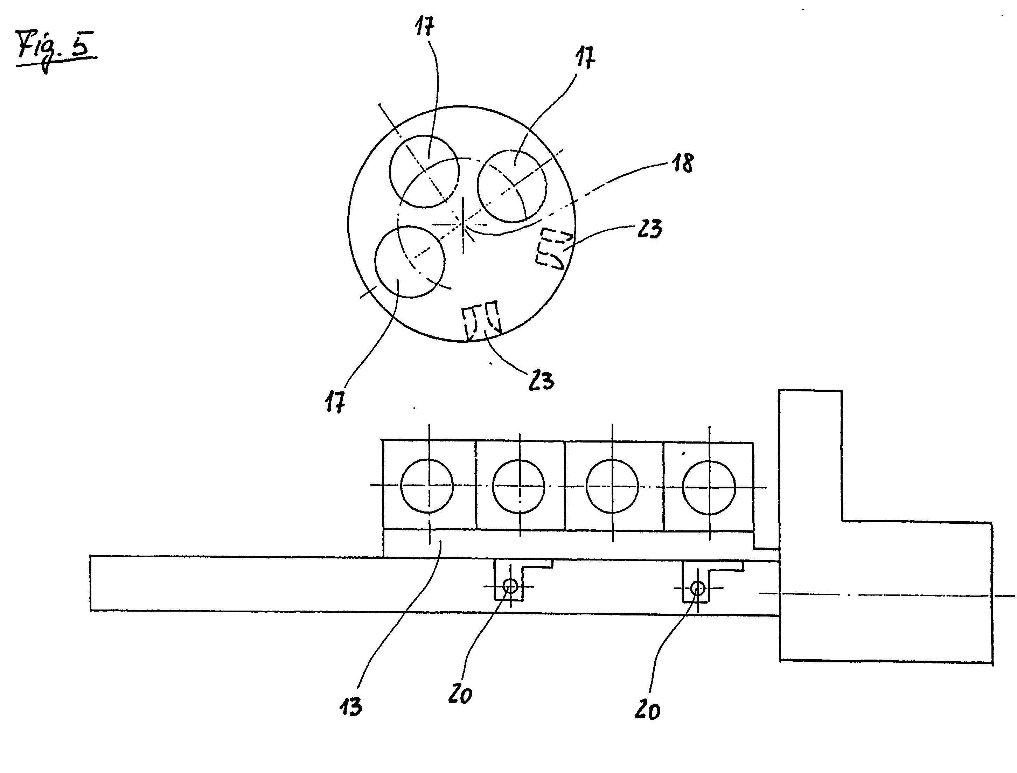

Die Abbildung ***Fig. 5*** zeigt schließlich eine alternative Ausführungsform von Reflektorträger 13 und Tubuslinsenwechsler 16. Bei dieser Ausführungsform ist der Tubuslinsenwechsler 16 mit drei Tubuslinsen 17 bestückt. Entsprechend weist der Reflektorträger 13 zwei Mitnehmerstifte 20 auf, die jeweils in eine entsprechende Aufnahme 23 des Tubuslinsenwechslers 16 eintreten können, um den Tubuslinsenwechsler 16 auf die dem jeweiligen Reflektor 12 entsprechende Tubuslinse 17 einzustellen.

Aufgrund der mechanischen Zwangskopplung zwischen Reflektorträger 13 und Tubuslinsenwechsler 16 wird sichergestellt, dass zu jedem Reflektor 12 jeweils auch automatisch die richtige Tubuslinse 17 im Betrachtungsstrahlengang angeordnet ist. Durch die mechanische Zwangskopplung kann darüber hinaus auf einen separaten Antrieb für den Tubuslinsenwechsler 16 verzichtet werden, da dieser über den Mitnehmerstift 20 zwangsgeführt verschwenkt wird.

### Bezugszeichenliste

- 1: Objektiv
- 2: Okular
- 3: Tubus
- 4: Beleuchtungseinrichtung
- 4a: Lampengehäuse
- 4b: Lichtquelle
- 4c: Blende
- 4d: Beleuchtungsoptik
- 5: Objekttisch
- 6: Probe
- 7: Stativ
- 8: Kamera
- 9: Rechner
- 10: Monitor
- 11: optische Achse
- 12: Reflektor
- 13: Reflektorträger
- 14: Antrieb
- 15: optische Achse
- 16: Tubuslinsenwechsler
- 17: Tubuslinse
- 17a: DUV-Tubuslinse
- 17b: VIS-Tubuslinse
- 18: Drehpunkt
- 19: Strahlteiler
- 20: Mitnehmerstift
- 21: Anschlag
- 22: Feder
- 23: Aufnahme
- 24: Anlaufschräge

## Patentansprüche

1. Mikroskop mit einer Möglichkeit zur Umschaltung der Beleuchtung zwischen dem ultravioletten Spektralbereich und dem sichtbaren VIS-Spektralbereich,
- mit einem Reflektorträger (13) mit mehreren wahlweise in den Beleuchtungsstrahlengang einbringbaren Reflektoren (12), die dem ultravioletten Spektralbereich oder dem sichtbaren VIS-Spektralbereich zugeordnet sind,
- wobei bei eine Umschaltung des Beleuchtungsstrahlengangs auf einen gewählten Spektralbereich erfolgt, indem ein diesem Spektralbereich zugeordneter Reflektor (12) in den Beleuchtungsstrahlengang eingebracht wird,
**dadurch gekennzeichnet,**
- **dass** der Reflektorträger (13) einen Reflektor (12) für den fernen ultravioletten DUV-Spektralbereich aufweist,
- **dass** im Abbildungsstrahlengang ein verstellbarer Tubuslinsenwechsler (16) mit mehreren wahlweise in den Abbildungsstrahlengang einbringbaren Tubuslinsen vorgesehen ist, von denen mindestens eine DUV-Tubuslinse (17a) für den fernen ultravioletten DUV-Spektralbereich sowie mindestens eine VIS-Tubuslinse (17b) für den sichtbaren VIS-Spektralbereich zugeordnet ist,
- und **dass** der Reflektorträger (13) einerseits und der Tubuslinsenwechsler (16) andererseits mechanisch miteinander gekoppelt sind.

2. Mikroskop nach Anspruch 1, **dadurch gekennzeichnet, dass**
bei Umschaltung auf einen gewählten Spektralbereich automatisch der Tubuslinsenwechsler (16) so verstellt wird, dass dieser eine dem gewählten Reflektor (12) und dem gewählten Spektralbereich entsprechende Tubuslinse (17) in der optischen Achse (15) anordnet.

3. Mikroskop nach Anspruch 2, **dadurch gekennzeichnet, dass** der Reflektorträger (13) und der Tubuslinsenwechsler (16) über mindestens einen Mitnehmerstift (20) miteinander zwangsgekoppelt sind.

4. Mikroskop nach Anspruch 3, **dadurch gekennzeichnet, dass** jeder Mitnehmerstift (20) als am Reflektorträger (13) festgelegter Stift ausgebildet ist, der in eine entsprechende Aufnahme (23) im Tubuslinsenwechsler (16) eingreift.

5. Mikroskop nach mindestens einem der Ansprüche 1 bis 4, **dadurch gekennzeichnet, dass** der Tubuslinsenwechsler (16) als drehbar gelagerte Scheibe ausgebildet ist.

6. Mikroskop nach Anspruch 5, **dadurch gekennzeichnet, dass** der Verdrehwinkel des Tubuslinsenwechslers (16) durch justierbare Anschläge (21) begrenzbar ist.

7. Mikroskop nach Anspruch 5, **dadurch gekennzeichnet, dass** der Tubuslinsenwechsler (16) in seinen Endlagen in Richtung auf die Anschläge (21) federbelastet ist.

8. Mikroskop nach mindestens einem der Ansprüche 1 bis 7, **dadurch gekennzeichnet, dass** der Reflektorträger (13) als Linearschieber ausgebildet ist.

9. Mikroskop nach Anspruch 8, **dadurch gekennzeichnet, dass** der als Linearschieber ausgebildete Reflektorträger (13) motorisch antreibbar ist.

## Claims

1. Microscope with a capability for switching over the illumination between the ultraviolet spectral medium and the visible VIS spectral region,
- comprising a reflector carrier (13) having a plurality of reflectors (12) which can optionally be introduced into the illuminating beam path and are assigned to the ultraviolet spectral region or the visible VIS spectral region,
- a switch-over of the illuminating beam path to a chosen spectral region being effected by a reflector (12) assigned to this spectral region being introduced into the illuminating beam path,
**characterized**
- **in that** the reflector carrier (13) has a reflector (12) for the far ultraviolet DUV spectral region,
- **in that** an adjustable tube lens changer (16) with a plurality of tube lenses that can optionally be introduced into the imaging beam path is provided in the imaging beam path, of which tube lenses at least one DUV tube lens (17a) is assigned for the far ultraviolet DUV spectral region and at least one VIS tube lens (17b) is assigned for the visible VIS spectral region,
- and **in that** the reflector carrier (13), on the one hand, and the tube lens changer (16), on the other hand, are mechanically coupled to one another.

2. Microscope according to Claim 1, **characterized in that**
upon switch-over to a chosen spectral region, the tube lens changer (16) is automatically adjusted in such a way that the latter disposes a tube lens (17) corresponding to the chosen reflector (12) and to the chosen spectral region in the optical axis (15).

3. Microscope according to Claim 2, **characterized in that** the reflector carrier (13) and the tube lens changer (16) are positively coupled to one another via at least one driver pin (20).

4. Microscope according to Claim 3, **characterized in that** each driver pin (20) is configured as a pin, retained on the reflector carrier (13), that engages into a corresponding receptacle (23) in the tube lens changer (16).

5. Microscope according to at least one of Claims 1 to 4, **characterized in that** the tube lens changer (16) is configured as a rotatably mounted disc.

6. Microscope according to Claim 5, **characterized in that** the rotation angle of the tube lens changer (16) can be limited by way of adjustable stops (21).

7. Microscope according to Claim 5, **characterized in that** in its end positions, the tube lens changer (16) is spring-loaded in the direction of the stops (21).

8. Microscope according to at least one of Claims 1 to 7, **characterized in that** the reflector carrier (13) is configured as a linear slider.

9. Microscope according to Claim 8, **characterized in that** the reflector carrier (13) configured as a linear slider is drivable in motorized fashion.

## Revendications

1. Microscope ayant une possibilité de commuter l'illumination entre la région spectrale de l'ultraviolet et la région spectrale du visible (VIS),
- avec un support (13) de réflecteurs avec plusieurs réflecteurs (12) pouvant être introduits facultativement dans la trajectoire du faisceau d'illumination, lesquels sont associés à la région spectrale de l'ultraviolet ou la région spectrale du visible (VIS),
- lors d'une commutation de la trajectoire du faisceau d'illumination sur une région spectrale choisie, il se produit une introduction d'un réflecteur (12) associé à cette région spectrale dans la trajectoire du faisceau d'illumination,
**caractérisé en ce que**
- le support (13) de réflecteurs présente un réflecteur (12) pour la région spectrale de l'ultraviolet lointain (DUV)
- dans la trajectoire du faisceau d'image, un changeur (16) de lentille tubulaire réglable est prévu avec plusieurs lentilles tubulaires pouvant être introduites facultativement dans la trajectoire du faisceau d'image, parmi lesquelles au moins une lentille tubulaire DUV (17a) est associée à la région spectrale de l'ultraviolet lointain DUV ainsi qu'au moins une lentille tubulaire VIS (17b) est associée à la région spectrale du visible VIS,
- et que le support de réflecteur (13) d'une part, et le changeur (16) de lentille tubulaire d'autre part sont couplés mécaniquement l'un à l'autre.

2. Microscope selon la revendication 1, **caractérisé en ce que**, lors d'une commutation sur une région spectrale choisie, le changeur (16) de lentille tubulaire est réglé automatiquement de sorte que celui-ci dispose une lentille tubulaire (17) correspondant au réflecteur choisi (12) et à la région spectrale choisie, dans l'axe optique (15).

3. Microscope selon la revendication 2, **caractérisé en ce que** le support de réflecteur (13) et le changeur (16) de lentille tubulaire sont couplés de force l'un à l'autre, par l'intermédiaire d'au moins une broche d'entraînement (20).

4. Microscope selon la revendication 3, **caractérisé en ce que** chaque broche d'entraînement (20) est produite sous la forme d'une broche fixée au support de réflecteur (13), laquelle s'engage dans un réceptacle correspondant (23) dans le changeur (16) de lentille tubulaire.

5. Microscope selon au moins l'une quelconque des revendications 1 à 4, **caractérisé en ce que** le changeur (16) de lentille tubulaire est produit sous forme de disque monté à rotation.

6. Microscope selon la revendication 5, **caractérisé en ce que** l'angle de torsion du changeur (16) de lentille tubulaire peut être délimité par des butées (21) ajustables.

7. Microscope selon la revendication 5, **caractérisé en ce que** le changeur (16) de lentille tubulaire est sollicité élastiquement dans ses positions d'extrémité en direction des butées (21).

8. Microscope selon au moins l'une quelconque des revendications 1 à 7, **caractérisé en ce que** le support de réflecteur (13) est produit sous la forme de coulisseau linéaire.

9. Microscope selon la revendication 8, **caractérisé en ce que** le support de réflecteur (13) produit sous forme de coulisseau linéaire, peut être entraîné par un moteur.
